(19) **Europäisches Patentamt / European Patent Office / Office européen des brevets**

(11) **EP 1 653 755 B1**

(12) **EUROPEAN PATENT SPECIFICATION**

(45) Date of publication and mention
of the grant of the patent:
**23.04.2008 Bulletin 2008/17**

(51) Int Cl.:
***H04Q 7/36*** (2006.01)

(21) Application number: **04405665.3**

(22) Date of filing: **01.11.2004**

(54) **Method and device for assessment of a coverage of a cellular network system**

Verfahren und Vorrichtung zur Bestimmung einer Abdeckung eines zellulären Netzsystems

Procédé et dispositif pour l'évaluation d'une couverture d'un système de réseau cellulaire

(84) Designated Contracting States:
**AT BE BG CH CY CZ DE DK EE ES FI FR GB GR HU IE IS IT LI LU MC NL PL PT RO SE SI SK TR**

(43) Date of publication of application:
**03.05.2006 Bulletin 2006/18**

(73) Proprietor: **Ascom (Schweiz) AG**
**3000 Bern 14 (CH)**

(72) Inventor: **Nänni, Christian**
**4600 Olten (CH)**

(74) Representative: **Roshardt, Werner Alfred**
**Keller & Partner**
**Patentanwälte AG**
**Schmiedenplatz 5**
**Postfach**
**3000 Bern 7 (CH)**

(56) References cited:
**EP-A- 1 326 465          GB-A- 2 392 054**
**US-A1- 2003 087 641      US-A1- 2003 134 641**

• **WACKER A ET AL: "Static simulator for studying WCDMA radio network planning issues" VEHICULAR TECHNOLOGY CONFERENCE, 1999 IEEE 49TH HOUSTON, TX, USA 16-20 MAY 1999, PISCATAWAY, NJ, USA,IEEE, US, vol. 3, 16 May 1999 (1999-05-16), pages 2436-2440, XP010342261 ISBN: 0-7803-5565-2**

## Description

### Technical Field

The invention relates to a method for assessment of a coverage of a cellular network system, in particular a CDMA cellular network system. It further relates to a device and a computer program product for assessment of a coverage of a cellular network system.

### Background Art

In CDMA radio networks such as CDMA or WCDMA cellular network systems (such as UMTS) the coverage of the network and its capacity are strongly interdependent characteristics. This interrelation causes the so-called "cell breathing" effect: If increasing load or interference is introduced to the network, the cell coverage shrinks. Since traffic in a cell changes continuously the coverage changes continuously as well.

In the course of deploying and optimising a CDMA network system it is one of the biggest challenges to get this interdependency under control, i. e. to build up a network that reliably provides consecutive coverage for a certain maximum load (target load) with a minimum of equipment. For this purpose, it has to be determined whether for a particular service a given location is covered by the network system under target load.

Today, basically two different approaches exist to verify the coverage under a predetermined target load. Firstly, simulation tools are available for assessing the coverage based on path loss prediction using static or dynamic network simulations.

The US 2003/0087641 A1 (Koninklijke KPN N.V.) relates to a simulation process for planning and evaluation of CDMA radio networks. Initially, the service area of the network is divided into pixels. Subsequently, for each pixel a probability is determined for it being covered by a cell of the radio network. To account for cell breathing the planning involves the calculation of a link budget for each pixel and of a noise rise for each cell.

However, the simulation approach has its drawbacks: Despite heavy numerical effort, the accuracy of the results finally depends on the prediction model used, and in case of static simulations the effects of the radio resource management are not covered.

A second approach is the use of noise generators to create additional load in the network until the predetermined target load is reached. However, in practice this can only be applied to small areas of the network, disturbs other traffic (of paying subscribers) and requires expensive equipment.

### Summary of the invention

It is the object of the invention to create a method pertaining to the technical field initially mentioned that allows for reliably and efficiently assessing the coverage of a cellular network system in large areas, without influencing the traffic.

The solution of the invention is specified by the features of claim 1. According to the invention, at a predetermined location at least one present quality value of the network system is measured. This quality value represents an aspect of the quality of the network at the predetermined location under the present load of the network system. Furthermore, at least one required quality value of the network system is determined, whereby this value is required for offering a predetermined service under a predetermined load (in particular the target load) of the network system. Finally, the required quality value is compared with the measured quality value in order to determine whether the predetermined location is covered by the network system for the predetermined service, under the predetermined load.

By employing the inventive method, large network areas may be analyzed without disturbing the traffic in the network. Reliable results are obtained without using expensive simulations depending from theoretical models and assumptions. In contrast, the inventive method is based on real measurements in the actual network system that is analyzed.

The determination may be based on just single quality value of the network system or on a suitable set of quality values. By repeating the steps of the inventive method at different predetermined locations (e. g. in the course of drive tests), the coverage area of the system may be identified for a plurality of different services and system loads.

Usually, the determination of the at least one required quality value is performed for a predetermined load of the network system that is higher than the load under which the measurement of the at least one present quality value is performed. Typically, the measurements will be performed in an early operation phase of the network when the user traffic is low, such that load is not yet a problem. By employing the inventive method, these low load measurements are "extrapolated" to a higher load, such as the target load of the network system. This is accomplished by taking into account the difference between the present load and the predetermined load (e. g. target load) in the determination of the at least one required quality value.

Furthermore, if the present load is less than a certain (network and system dependent) threshold, the interference level is low, such that it is safe to assume that the measurement is taken at "zero load". This assumption allows for simplifying the analysis.

Alternatively, the present quality value may be measured under "high load" of the network system, e. g. in order to assess the coverage under similar (or different) load conditions for a predetermined service. If an extrapolation from a certain (non-zero) present load to a different predetermined load is to be performed, the present load will be determined as well, along with the present quality value.

Preferably, the coverage of the predetermined location is separately determined for an uplink as well as for a downlink of the network system. Most of the services in a network system require that a downlink as well as an uplink are established. However, the conditions for establishing an uplink are different from the conditions for establishing a downlink. It is the transmit power of the user terminal (user equipment, UE) and the receiver sensitivity of the base station that are key factors concerning uplink transmissions, whereas it is the transmit power of the base station and the receiver sensitivity of the user terminal that are relevant for the downlink. Furthermore, the impact of interference is different at the user terminal (i. e. for the downlink) from that at the base station (i. e. for the uplink). Therefore, the fact that a downlink may be established is no guarantee that an uplink may be established as well (and vice versa). Furthermore, various services in a network system are of an asymmetric nature, i. e. require different (usually higher) transmission bandwidths for the downlink compared to the uplink. For all these reasons, the requirements for establishing a reliable downlink differ from those for establishing a reliable uplink.

Note that it may be necessary to measure different present quality values (or sets of quality values) of the network system for the uplink and for the downlink (and correspondingly to use different required quality values). In some cases, it may suffice to measure just one quality value (or the same set of quality values) and to determine different required quality values for the uplink and for the downlink.

Alternatively, the coverage of the location is determined either for only the uplink or the downlink (preferably for that link that is more demanding concerning transmission quality) or a single analysis is performed that yields information about both the uplink as well as the downlink.

For assessing the downlink coverage of a location the at least one present quality value of the network system preferably comprises a present signal-to-noise ratio of a signal transmitted by the base station of the network system as received by a user terminal located at the predetermined location, where the signal-to-noise ratio depends - inter alia - on the present load of the network system.

The at least one required quality value of the network system correspondingly comprises a minimum signal-to-noise ratio of the signal transmitted by the base station as received by the user terminal, which is required if the predetermined service shall be offered under the predetermined load. The determination of this minimum signal-to-noise ratio therefore involves taking into account of the impact of the difference between the present load and the predetermined load as well as of the specific requirements of the predetermined service (transfer rate, maximum error rate, maximum delay etc.)

Finally, the comparison with the present signal-to-noise ratio indicates whether a downlink may be established for the predetermined service under the predetermined load of the network system. If the minimum signal-to-noise ratio is not achieved, the location is considered a coverage hole in downlink direction.

Preferably, the present signal-to-noise ratio is obtained from an $E_c/I_0$ measurement of a pilot channel of the network system. A pilot channel is a special channel in CDMA systems which is constantly transmitted by the base stations of the network system. It is used for acquisition with the network, which involves the user terminal locating the pilot channel. In WCDMA suitable pilot channels are denoted by CPICH (common pilot channel). The expression $E_c/I_0$ relates to the difference between the total signal strength and the noise floor, i. e. to the "usable" signal. This parameter is easily available and suitable for assessing the coverage for a variety of predetermined services.

Alternatively, another signal-to-noise ratio is used, e. g. the ratio $E_b/N_0$ of a traffic channel.

For assessing the uplink coverage of a location the at least one present quality value of the network system preferably comprises a present path loss of a signal transmitted by the base station of the network system as received by a user terminal located at the predetermined location, where the path loss depends - inter alia - on the present load of the network system.

The at least one required quality value of the network system correspondingly comprises a maximum path loss of the signal transmitted by the base station as received by the user terminal which is required if the predetermined service shall be offered under the predetermined load. The determination of this maximum path loss therefore involves taking into account of the impact of the difference between the present load and the predetermined load as well as of the specific requirements of the predetermined service (transfer rate, maximum error rate, maximum delay etc.)

Finally, the comparison with the present path loss indicates whether an uplink may be established for the predetermined service under the predetermined load of the network system. If the maximum path loss is exceeded, the location is considered a coverage hole in uplink direction.

Despite the path loss being measured for a signal transmitted by the base station to the user terminal (i. e. in "downlink direction"), this quantity allows for assessing the quality of an uplink. This is because attenuation of the signal is approximately equal for uplink as well as for downlink signal paths and the different frequencies of the uplink and downlink channels only have an insignificant effect.

Preferably, the present path loss is determined from a measurement of the RSCP (received signal coded power) of a pilot channel and from a transmit power of the pilot channel at the base station. The difference of the transmit power and the received power (RSCP) is a direct measure for the path loss the signal has experienced. Both quantities are easily available in usual CDMA systems: in WCDMA RSCP is measured at the user terminal (UE), whereas the transmit power is part of the system information distributed to the UEs in system info blocks (SIB).

For deciding whether an uplink may be established a required uplink transmit power for offering a predetermined service under the predetermined load may be determined from the measured present path loss and the predetermined load. The required uplink transmit power is then compared to a maximum uplink transmit power of the user terminal. If the required transmit power exceeds the maximum transmit power, the location is considered a coverage hole in uplink direction. The maximum transmit power of the UE is determined by the capability of the phone or by a maximum limit accepted in the network in question.

Note that - as in this case - it is always possible to perform the comparison of the present quality value and the required quality value by calculating other values depending on these variables and by actually comparing these ("proxy") values.

Advantageously, the at least one present quality value is measured in an idle mode, without establishing a test connection in the network system. This may be achieved by employing the above mentioned values ($E_c/I_0$ and RSCP of the pilot channel). Thereby, the network system does not experience additional load.

A device for assessment of a coverage of a cellular network system, in particular a CDMA cellular network system, comprises a data processor which is controlled to

- determine at least one present quality value of the network system from signals received from the cellular network system, under a present load of the network system;

- determine at least one required quality value of the network system, which is required for offering a predetermined service under a predetermined load, in particular a target load, of the network system, and

- comparing the required quality value with the measured present quality value for determining whether the predetermined location is covered by the network system for the predetermined service under the predetermined load of the network system.

These functions (and further steps of the inventive process) may be implemented in a dedicated test device, or a usual personal computer (preferably a portable device such as a notebook or sub-notebook computer or even a PDA) may be software-controlled to perform these tasks by employing a corresponding computer program product.

Preferably, the device is connectable to a communication device such as a handy or a dedicated test receiver for receiving the signals to the cellular network system. Thereby, available and inexpensive devices may be employed for signal receiving and processing.

Other advantageous embodiments and combinations of features come out from the detailed description below and the totality of the claims.

**Brief description of the drawings**

The drawings used to explain the embodiments show:

Fig. 1    A schematic illustration of the cell breathing effect in CDMA networks;

Fig. 2    a schematic representation of a device for assessment of a coverage of a cellular network system;

Fig. 3    an example of the relation between the load level in the network and a required signal-to-noise ratio for establishing a downlink; and

Fig. 4    an example of the relation between the load level in the network and a required transmit power of the user terminal for establishing an uplink.

In the figures, the same components are given the same reference symbols.

**Preferred embodiments**

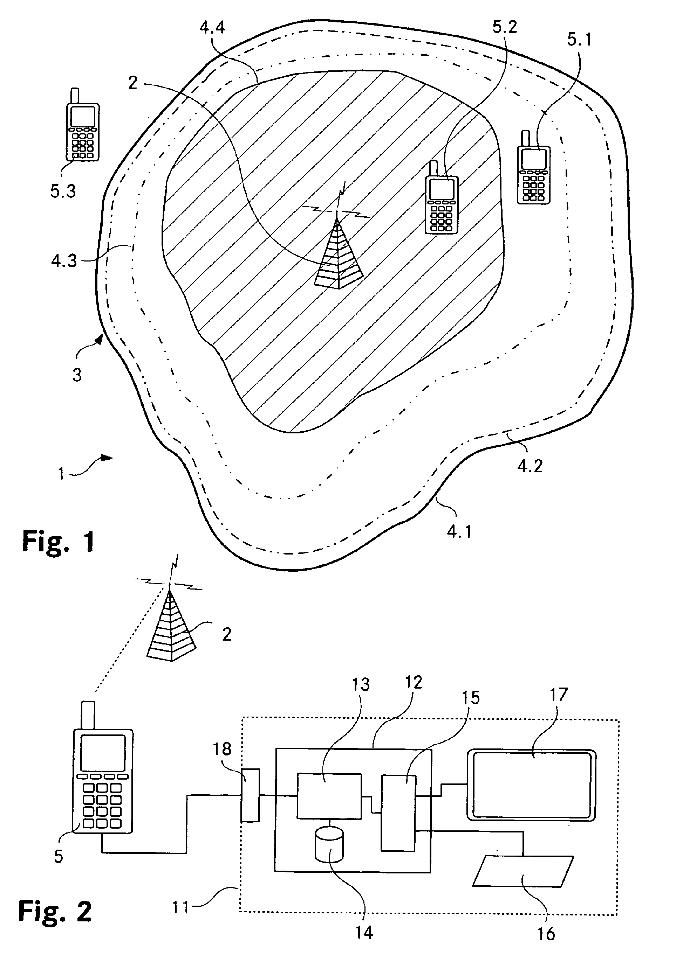

Figure 1 illustrates the cell breathing effect in CDMA networks. Each cell 1 of the network has a base station 2 (BTS or node B in a UMTS network). The cell 1 covers a certain region, the coverage area 3 of the cell 1. If there is little traffic (or load) in the network, the coverage area 3 may extend to a large region 4.1 for a certain service A (e. g. standard voice communication). It is possible to establish links from user terminals 5.1, 5.2 (or user equipment UE) located within the region 4.1 to the base station 2 for a service A communication. User terminals 5.3 located outside the region 4.1 are not covered by the cell 1 and there is no possibility of a service A link between this user terminal 5.3 and the base station 2 of cell 1. If available, the user terminal 5.3 may contact a base station of an adjacent cell to establish a communication link within the network.

The load of the network may be quantified by a parameter $\eta$ whose value is between 0 (no load, i. e. no interference) and 1 (full network, no possibility whatsoever for further links). If the load of the network system increases, the coverage area 3 shrinks. For example, under a load which corresponds to $\eta = 0.7$, the coverage area 3 might extend to the region 4.2 which is smaller than the region 4.1 covered at substantially zero load (small $\eta$).

The network is designed such that there are no coverage holes (locations that are not covered by any cell of the network) for a certain target load $\eta_{target}$. In the example displayed in Figure 1 the target load corresponds to $\eta_{target}= 0.85$, and the corresponding coverage area 3 extends to a region 4.3 which is again smaller than the region 4.2 covered at $\eta = 0.7$. If coverage holes for service A communications at target load shall be avoided within the network, all locations outside the region 4.3 should lie within the coverage area of other cells (at the respective target loads of these other cells which may differ from the target load of the cell 1 in question).

If it is planned to provide additional services (service B) in the network that require e. g. higher data bandwidths and/or if the target load is to be increased for the cell 1 in question, the coverage area 3 of the network may be smaller for the new services and/or the new target load. In the example displayed in Figure 1, the resulting coverage area 3 corresponds to the region 4.4. With the user terminal 5.1 located within the present coverage area 3 (region 4.3) but not within the smaller region 4.4 it is possible to establish service A communications if the target load does not exceed the present target load. However with this user terminal 5.1 it may not be possible to establish links for service B communications and/or if the load exceeds the present target load. Only for user terminal 5.2 located within the new coverage area 3 (region 4.4) communication links will be possible for service B and/or for a network load corresponding to the new target load.

Therefore, in order to avoid coverage holes, it is of vital importance that the new coverage area 3 corresponding to the region 4.4 may be determined before the additional services are offered or before the target load is increased. If it turns out during this analysis that coverage holes might be a problem, appropriate countermeasures may be taken, e. g. addition of new cells, increasing transmit power at the base station etc.

Based on measurements in an existing CDMA network at low load (small $\eta$), the downlink coverage at another load level $\eta_{DL}$ and/or for another service may be determined as explained in the following.

To simplify the analysis we assume that the present load in the network is low enough that its effects may be neglected ($\eta_{present} = 0$). The signal-to-noise ratio $(E_c/I_0)_{CPICH, \; meas}$ from the pilot channel CPICH (common pilot channel) is measured at a given location where it shall be determined whether it is still within the coverage area for a downlink at a load level $\eta_{DL}$, for a service characterized by the following parameters:

R = service bit rate,

$(E_b/N_0)_{req}$ = required $E_b/N_0$ for the service in question.

Note that for describing the downlink coverage analysis we use logarithmic expressions.

The transmit power $P_{Tx,CPICH}$ of the pilot channel CPICH which is needed for the subsequent analysis may be obtained from the system information broadcasted within the network system (e. g. in so-called system info blocks SIB). Further system parameters that enter the analysis are a maximum allowed transmit power $P_{limit}$ for one user and the chip rate W of the network system, which is a constant in WCDMA and amounts to 3.84 Mcps.

Usually, the relation between the transmit power $P_{Tx,CPICH}$ of the pilot channel CPICH and the transmit power of a service, namely a power offset $P_{offset} = P_{Tx,ref} - P_{Tx,CPICH}$ is exclusively known for a certain reference service characterized by the following parameters:

$R_{ref}$ = reference service bit rate,

$(E_b/N_0)_{ref}$ = required $E_b/N_0$ for the reference service.

Knowing these parameters, the available transmit power $P_{TX,DPCH}$ for the service in question is calculated from the transmit power $P_{Tx,CPICH}$ of the pilot channel CPICH as follows:

$$P_{Tx,DPCH} = \mathrm{Min}\left( P_{Limit}, P_{Tx,CPICH} + P_{Offset} + 10 \times \log_{10}\left(\frac{R}{R_{ref}}\right) + \left(\frac{E_b}{N_o}\right)_{req} - \left(\frac{E_b}{N_o}\right)_{ref} \right),$$

where the transmit power is limited to the maximum transmit power $P_{limit}$ for one user.

The signal-to-noise ratio $(E_c/I_0)_{DPCH,\,req}$ which is required for establishing a downlink for the service in question is related to the corresponding known signal-to-noise ratio $(E_b/N_0)_{req}$ by

$$\left(\frac{E_c}{I_o}\right)_{DPCH,req} = \left(\frac{E_b}{N_o}\right)_{req} - 10 \times \log_{10}\left(\frac{W}{R}\right) - 2.$$

The effect of the load (at load level $\eta_{DL}$) is a rise of the noise level of $-10\log_{10}(1-\eta_{DL})$ compared to a situation of low (negligible) load. Therefore the signal-to-noise ratio $(E_c/I_0)_{DPCH,\,req,\,no\,load}$ that is required at zero load in order to establish the service in question at load level $\eta_{DL}$ amounts to the following term:

$$\left(\frac{E_c}{I_o}\right)_{DPCH,req,noload} = \left(\frac{E_c}{I_o}\right)_{DPCH,req} - 10 \times \log_{10}\left(1 - \eta_{DL}\right).$$

Finally, the required signal-to-noise ratio $(E_c/I_0)_{CPICH,\,no\,load}$ for the pilot channel CPICH at load level zero that is required for establishing a downlink of the service in question at load level $\eta_{DL}$ is calculated as follows:

$$\left(\frac{E_c}{I_o}\right)_{CPICH,noload} = \left(\frac{E_c}{I_o}\right)_{DPCH,req,noload} + P_{Tx,CPICH} - P_{Tx,DPCH} .$$

A comparison of $(E_c/I_0)_{CPICH,noload}$ with the measured value $(E_c/I_0)_{CPICH,meas}$ shows whether at the present location

$(E_c/I_0)_{CPICH,noload} < (E_c/I_0)_{CPICH,\,meas}$ :  a downlink may be established; or

$(E_c/I_0)_{CPICH,noload} > (E_c/I_0)_{CPICH,\,meas}$ :  a downlink may not be established (coverage hole)

at load level $\eta_{DL}$ for the service in question.

Similarly, the uplink coverage at load level $\eta_{UL}$ for a given service is calculated from measurements in an existing CDMA network at low load (small $\eta$) as explained in the following. Please note, that we use linear expressions for this analysis and that we will again neglect the effects of residual low load in the network ($\eta_{present} = 0$).

The pilot received signal coded power $P_{RSCP}$ is measured at a given location for which it shall be determined whether it is still within the coverage area for an uplink at the load level $\eta_{DL}$ for a given service, where the service is characterized by the following parameters:

R = service bit rate,

$\rho = (E_b/N_0)_{req}$ = required $E_b/N_0$ for the service in question,

$\nu$ = service activity (0..1).

From the ratio of the RSCP $P_{RSCP}$ and the transmit power $P_{Tx,CPICH}$ of the pilot channel at the base station which may be obtained from the system information broadcasted within the network system, the path loss $L_p$ is calculated:

$$L_p = P_{Tx,CPICH} / P_{RSCP}.$$

Using this value as well as the information about the service in question and the parameters No (noise floor in the unloaded cell, corresponding to a constant value of -108.4dBm) and W (chip rate of the network system, 3.84 Mcps), we obtain a transmit power $P_{tx}$ of the user terminal which is required for establishing an uplink of the service in question at load level $\eta_{UL}$:

$$P_{tx} = \frac{N_0 \times L_p}{v \times (1 - \eta_{UL}) \times \left(1 + \dfrac{W}{R \times \rho \times v}\right)}.$$

A comparison of this value with a maximum transmit power of the phone or a maximum limit accepted in the network ($P_{max}$) shows whether at the present location

$P_{tx} < P_{max}$ :    an uplink may be established; or
$P_{tx} > P_{max}$ :    an uplink may not be established (coverage hole)

at load level $\eta_{UL}$ for the service in question.

The Figure 2 is a schematic representation of a device for assessment of a coverage of a cellular network system. The device 11 includes a processing unit 12 comprising a central processing unit (CPU) 13, a memory 14 as well as an I/O interface 15. Data input and output means such as a keyboard 16 and a display 17 are connected to the I/O interface 15 of the processing unit 12. The device 11 is connected to a user terminal 5 such as a usual cellular phone for the network system by means of a suitable interface 18. The device 11 including the processing unit 12, the keyboard 16 and the display 17 may be integrated into a single unit such as a usual notebook computer. The interface 18 may be a PCMCIA or cardbus device that may be inserted in a corresponding slot of the notebook computer.

Signals of the network are transmitted by a base station of the network system and received and processed by the user terminal 5. Data required for the coverage analysis is transmitted to the device 11 where the computations are performed that have been described above. For this purpose, the device 11 is controlled by corresponding software. At a given location the result of the computations is substantially a table of binary information (coverage YES/NO) for different service parameters, different prospective load levels $\eta$ and/or different prospective system parameters. This information may be stored in the device 11 (e. g. on a hard disk) for further analysis or it may be automatically transferred to a central analysis unit of the network (e. g. by using the user terminal 5 connected to the device 11).

After the information has been collected for several locations (e. g. in the course of a drive test), it is possible to draw maps which indicate the coverage areas for different services, different system parameters and different loads. For this purpose, it is advantageous to employ a navigation system (e. g. GPS) that determines the present location and allows for automatically providing the network information with corresponding location information.

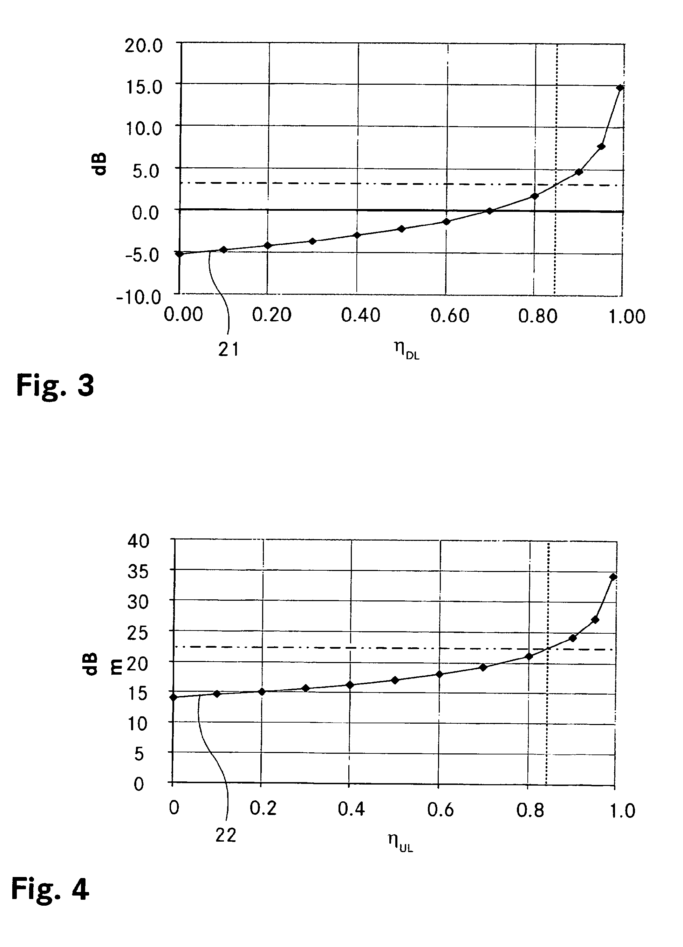

The Figure 3 shows an example of the relation between the load level in the network and a required signal-to-noise ratio for establishing a downlink of a service. The value of the load $\eta_{DL}$ is plotted on the horizontal (X) axis whereas the value of the required signal-to-noise ratio $(E_c/I_0)_{CPICH}$, no load for the pilot channel CPICH at load level zero that is required for establishing a downlink of the service in question is plotted on the vertical (Y) axis (in logarithmic units).

It is clear from curve 21 that the variation of the required S/N ratio is rather small for low loads (say up to about $\eta_{DL} = 0.4$) whereas its effect becomes significant for higher loads (especially for $\eta_{DL} > 0.6$). This justifies the simplification made during the analysis of neglecting the low load influence. In the example shown, the S/N ratio $(E_c/I_0)_{CPICH, meas}$ measured at a given location amounts to 3.5 dB. As can be seen from the curve 21 the required S/N ratio for establishing a downlink for the service in question is smaller than the measured value as long as the network load $\eta_{DL}$ is below about 0.85. This signifies that the given location is within the coverage of the cell (for the given service) as long as the load is below $\eta_{DL} = 0.85$. If the target load of the network is to be increased above this value, it will be necessary to take countermeasures in order to avoid coverage holes.

The Figure 4 shows an example of the relation between the load level in the network and a required transmit power of the user terminal for establishing an uplink of a service. The value of the load $\eta_{UL}$ is plotted on the horizontal (X) axis whereas the value of the required transmit power $P_{tx}$ (converted to logarithmic units) required for establishing the uplink of the service in question is plotted on the vertical (Y) axis.

Again, curve 22 shows that the variation of the required transmit power $P_{tx}$ is small for low loads (say up to about $\eta_{DL}$ = 0.5) whereas its effect becomes significant for higher loads (especially for $\eta_{DL}$ > 0.6). This again justifies the simplification of neglecting the low load influence. In the example shown, the maximum transmit power of the user terminal amounts to 22.5 dBm. As can be seen from the curve 22, the required transmit power for establishing an uplink for the service in question is smaller than the maximum value as long as the network load $\eta_{DL}$ is below about 0.85. This signifies that the given location is within the coverage of the cell (for the given service) as long as the load is below $\eta_{DL}$ = 0.85. If the target load of the network is to be increased above this value, it will be necessary to take countermeasures in order to avoid coverage holes.

If the present load of the system is known at the time when the signal/noise ratio and/or the path loss are measured, it is possible to include that information into the analysis. For this purpose a corresponding correction term +10 $\log_{10}$ (1-$\eta_{present}$) will enter the expression for the noise rise and a corresponding correction term (1-$\eta_{present}$) will have to be multiplied with the expression for the required transmit power $P_{tx}$.

The device for assessing the coverage of the network system may be a dedicated test device which includes all the necessary components for receiving and processing the signals from the network as well as for performing the analysis and further processing the analysis results. Alternatively, the signal receiving and initial processing is performed by a dedicated receiver that is e. g. formed on a plug-in card for a usual computer. Instead of this, raw data (e. g. the measured signal/noise ratio and the present value of RSCP) is transmitted to a central analysis unit of the network, e. g. by usual user terminals and all the further processing takes place at the central unit.

In summary, it is to be noted that the invention creates a method, a device and a computer program product that allow for reliably and efficiently assessing the coverage of a cellular network system in large areas, without influencing the traffic.

**Claims**

1. A method for assessment of a coverage of a cellular network system, in particular a CDMA cellular network system, comprising the following steps:

   - at a predetermined location measuring at least one present quality value of the network system, under a present load of the network system;
   - determining at least one required quality value of the network system which is required for offering a predetermined service under a predetermined load, in particular a target load, of the network system; and
   - comparing the required quality value with the measured quality value for determining whether the predetermined location is covered by the network system for the predetermined service under the predetermined load of the network system.

2. The method according to claim 1, **characterized in that** the determination of the at least one required quality value is performed for a predetermined load of the network system that is higher than the load under which the measurement of the at least one present quality value is performed.

3. The method according to claim 1 or 2, **characterized in that** the coverage of the predetermined location is separately determined for an uplink as well as for a downlink of the network system.

4. The method according to one of claims 1 to 3, **characterized in that**

   - the at least one present quality value of the network system comprises a present signal-to-noise ratio of a signal transmitted by a base station (2) of the network system as received by a user terminal (5, 5.1, 5.2, 5.3), at the predetermined location, under the present load of the network system;
   - the at least one required quality value of the network system comprises a minimum signal-to-noise ratio of the signal transmitted by the base station (2) as received by the user terminal (5, 5.1, 5.2, 5.3, 5.4) which is required for offering the predetermined service under the predetermined load; and
   - the present signal-to-noise ratio and the minimum signal-to-noise ratio are compared in order to determine whether a downlink for the predetermined service under the predetermined load of the network system may be established.

5. The method according to claim 4, **characterized in that** the present signal-to-noise ratio is obtained from an $E_c/I_0$ measurement of a pilot channel of the network system.

6. The method according to one of claims 1 to 5, **characterized in that**

   - the at least one present quality value of the network system comprises a present path loss of a signal transmitted by a base station (2) of the network system as received by a user terminal (5, 5.1, 5.2, 5.3, 5.4), at the predetermined location under the present load of the network system;
   - the at least one required quality value of the network system comprises a maximum path loss of the signal transmitted by the base station (2) as received by the user terminal (5, 5.1, 5.2, 5.3, 5.4) which is required for offering the predetermined service under the predetermined load; and
   - the present path loss and the maximum path loss are compared in order to determine whether an uplink for the predetermined service under the predetermined load of the network system may be established.

7. The method according to claim 6, **characterized in that** the present path loss is determined from a measurement of the RSCP (received signal coded power) of a pilot channel and from a transmit power of the pilot channel at the base station (2).

8. The method according to claim 6 or 7, **characterized in that** a required uplink transmit power for offering a predetermined service under the predetermined load is determined from the measured present path loss and the predetermined load, and **in that** the required uplink transmit power is compared to a maximum uplink transmit power of the user terminal (5, 5.1, 5.2, 5.3).

9. The method according to one of claims 1 to 8, **characterized in that** the at least one present quality value is measured in an idle mode, without establishing a test connection in the network system.

10. A device for assessment of a coverage of a cellular network system, in particular a CDMA cellular network system, comprising a data processor (12) controlled to

    - determine at least one present quality value of the network system from signals received from the network system, under a present load of the network system;
    - determine at least one required quality value of the network system which is required for offering a predetermined service under a predetermined load, in particular a target load, of the network system, and
    - comparing the required quality value with the measured present quality value for determining whether the predetermined location is covered by the network system for the predetermined service under the predetermined load of the network system.

11. The device as recited in claim 10, **characterized in that** it is connectable to a communication device (5) such as a handy or a dedicated test receiver for receiving the signals from the cellular network system.

12. A computer program product for assessment of a coverage of a cellular network system, in particular a CDMA cellular network system, comprising software code portions for performing the following steps:

    - determine at least one present quality value of the network system from signals received from the network system, under a present load of the network system;
    - determine at least one required quality value of the network system which is required for offering a predetermined service under a predetermined load, in particular a target load, of the network system, and
    - comparing the required quality value with the measured present quality value for determining whether the predetermined location is covered by the network system for the predetermined service under the predetermined load of the network system.

**Patentansprüche**

1. Verfahren zum Bestimmen einer Abdeckung eines Zellularnetzsystems, insbesondere eines CDMA-Zellularnetzsystems, mit folgenden Schritten:

   - an einem vorbestimmten Standort, Messen mindestens eines gegenwärtigen Gütewerts des Netzsystems unter einer gegenwärtigen Belastung des Netzsystems;

- Bestimmen mindestens eines erforderlichen Gütewertes des Netzsystems, der zum Anbieten eines vorbestimmten Dienstes unter einer vorbestimmten Belastung, besonders einer Zielbelastung, des Netzsystems erforderlich ist; und
- Vergleichen des erforderlichen Gütewertes mit dem gemessenen Gütewert zum Bestimmen, ob der vorbestimmte Standort durch das Netzsystem für den vorbestimmten Dienst unter der vorbestimmten Belastung des Netzsystems abgedeckt ist.

2. Verfahren nach Anspruch 1, **dadurch gekennzeichnet, daß** die Bestimmung des mindestens einen erforderlichen Gütewertes für eine vorbestimmte Belastung des Netzsystems durchgeführt wird, die höher ist als die Belastung, unter der die Messung des mindestens einen gegenwärtigen Gütewertes durchgeführt wird.

3. Verfahren nach Anspruch 1 oder 2, **dadurch gekennzeichnet, daß** die Abdeckung des vorbestimmten Standortes getrennt für eine Aufwärtsstrecke wie auch eine Abwärtsstrecke des Netzsystems bestimmt wird.

4. Verfahren nach einem der Ansprüche 1 bis 3, **dadurch gekennzeichnet, daß**

- der mindestens eine gegenwärtige Gütewert des Netzsystems ein gegenwärtiges Signal-Rausch-Verhältnis eines durch eine Basisstation (2) des Netzsystems übertragenen Signals wie empfangen durch ein Benutzerendgerät (5, 5.1, 5.2, 5.3) an dem vorbestimmten Standort unter der gegenwärtigen Belastung des Netzsystems umfaßt;
- der mindestens eine erforderliche Gütewert des Netzsystems ein minimales Signal-Rausch-Verhältnis des durch die Basisstation (2) übertragenen Signals wie empfangen durch das Benutzerendgerät (5, 5.1, 5.2, 5.3, 5.4) umfaßt, das zum Anbieten des vorbestimmten Dienstes unter der vorbestimmten Belastung erforderlich ist; und
- das gegenwärtige Signal-Rausch-Verhältnis und das minimale Signal-Rausch-Verhältnis verglichen werden, zum Bestimmen, ob eine Abwärtsstrecke für den vorbestimmten Dienst unter der vorbestimmten Belastung des Netzsystems hergestellt werden kann.

5. Verfahren nach Anspruch 4, **dadurch gekennzeichnet, daß** das gegenwärtige Signal-Rausch-Verhältnis aus einer $E_c/I_0$-Messung eines Pilotkanals des Netzsystems erhalten wird.

6. Verfahren nach einem der Ansprüche 1 bis 5, **dadurch gekennzeichnet, daß**

- der mindestens eine gegenwärtige Gütewert des Netzsystems eine gegenwärtige Übertragungsdämpfung eines durch eine Basisstation (2) des Netzsystems übertragenen Signals wie empfangen durch ein Benutzerendgerät (5, 5.1, 5.2, 5.3, 5.4) am vorbestimmten Standort unter der gegenwärtigen Belastung des Netzsystems umfaßt;
- der mindestens eine erforderliche Gütewert des Netzsystems eine maximale Übertragungsdämpfung des durch die Basisstation (2) übertragenen Signals wie empfangen durch das Benutzerendgerät (5, 5.1, 5.2, 5.3, 5.4) umfaßt, die zum Anbieten des vorbestimmten Dienstes unter der vorbestimmten Belastung erforderlich ist; und
- die gegenwärtige Übertragungsdämpfung und die maximale Übertragungsdämpfung verglichen werden, zum Bestimmen, ob eine Aufwärtsstrecke für den vorbestimmten Dienst unter der vorbestimmten Belastung des Netzsystems hergestellt werden kann.

7. Verfahren nach Anspruch 6, **dadurch gekennzeichnet, daß** die gegenwärtige Übertragungsdämpfung aus einer Messung der RSCP (Received Signal Coded Power - empfangssignalcodierten Leistung) eines Pilotkanals und aus einer Sendeleistung des Pilotkanals an der Basisstation (2) bestimmt wird.

8. Verfahren nach Anspruch 6 oder 7, **dadurch gekennzeichnet, daß** eine erforderliche Aufwärts-Sendeleistung zum Anbieten eines vorbestimmten Dienstes unter der vorbestimmten Belastung aus der gemessenen gegenwärtigen Übertragungsdämpfung und der vorbestimmten Belastung bestimmt wird, und daß die erforderliche Aufwärts-Sendeleistung mit einer maximalen Aufwärts-Sendeleistung des Benutzerendgeräts (5, 5.1, 5.2, 5.3) verglichen wird.

9. Verfahren nach einem der Ansprüche 1 bis 8, **dadurch gekennzeichnet, daß** der mindestens eine gegenwärtige Gütewert in einem Bereitschaftsmodus ohne Herstellung einer Prüfverbindung im Netzsystem gemessenen wird.

**10.** Vorrichtung zum Bestimmen einer Abdeckung eines Zellularnetzsystems, insbesondere eines CDMA-Zellularnetzsystems, mit einem Datenprozessor (12) gesteuert zum

- Bestimmen mindestens eines gegenwärtigen Gütewertes des Netzsystems aus aus dem Netzsystem empfangenen Signalen unter einer gegenwärtigen Belastung des Netzsystems;
- Bestimmen mindestens eines erforderlichen Gütewertes des Netzsystems, der zum Anbieten eines vorbestimmten Dienstes unter einer vorbestimmten Belastung, besonders einer Zielbelastung, des Netzsystems erforderlich ist, und
- Vergleichen des erforderlichen Gütewertes mit dem gemessenen gegenwärtigen Gütewert zum Bestimmen, ob der vorbestimmte Standort durch das Netzsystem für den vorbestimmten Dienst unter der vorbestimmten Belastung des Netzsystems abgedeckt ist.

**11.** Vorrichtung nach Anspruch 10, **dadurch gekennzeichnet, daß** sie mit einer Kommunikationsvorrichtung (5) wie beispielsweise einem Handy oder einem zweckbestimmten Prüfempfänger zum Empfangen der Signale aus dem Zellularnetzsystem verbindbar ist.

**12.** Computerprogrammprodukt zum Bestimmen einer Abdeckung eines Zellularnetzsystems, besonders eines CDMA-Zellularnetzsystems mit Softwarecodeteilen zur Durchführung folgender Schritte:

- Bestimmen mindestens eines gegenwärtigen Gütewertes des Netzsystems aus aus dem Netzsystem empfangenen Signalen unter einer gegenwärtigen Belastung des Netzsystems;
- Bestimmen mindestens eines erforderlichen Gütewertes des Netzsystems, der zum Anbieten eines vorbestimmten Dienstes unter einer vorbestimmten Belastung, besonders einer Zielbelastung, des Netzsystems erforderlich ist, und
- Vergleichen des erforderlichen Gütewertes mit dem gemessenen gegenwärtigen Gütewert zum Bestimmen, ob der vorbestimmte Standort durch das Netzsystem für den vorbestimmten Dienst unter der vorbestimmten Belastung des Netzsystems abgedeckt ist.

**Revendications**

**1.** Procédé d'évaluation d'une couverture d'un système de réseau cellulaire, en particulier un système de réseau cellulaire CDMA, comprenant les étapes suivantes :

- à un emplacement prédéterminé, mesure d'au moins une valeur de qualité présente du système de réseau, sous une charge présente du système de réseau ;
- détermination d'au moins une valeur de qualité requise du système de réseau qui est requis pour offrir un service prédéterminé sous une charge prédéterminée, en particulier une charge cible, du système de réseau ; et
- comparaison de la valeur de qualité requise avec la valeur de qualité mesurée pour déterminer si l'emplacement prédéterminé est couvert par le système de réseau pour le service prédéterminé sous la charge prédéterminée du système de réseau.

**2.** Procédé selon la revendication 1, **caractérisé en ce que** la détermination de la au moins une valeur de qualité requise est réalisée pour une charge prédéterminée du système de réseau qui est plus élevé que la charge sous laquelle la mesure de la au moins une valeur de qualité présente est réalisée.

**3.** Procédé selon la revendication 1 ou 2, **caractérisé en ce que** la couverture de l'emplacement prédéterminé est déterminée séparément pour une liaison montante ainsi que pour une liaison descendante du système de réseau.

**4.** Procédé selon l'une quelconque des revendications 1 à 3, **caractérisé en ce que**

- la au moins une valeur de qualité présente du système de réseau comprend un rapport signal sur bruit présent d'un signal émis par une station de base (2) du système de réseau comme reçu par un terminal d'utilisateur (5, 5.1, 5.2, 5.3) à l'emplacement prédéterminé, sous la charge présente du système de réseau ;
- la au moins une valeur de qualité requise du système de réseau comprend un rapport signal sur bruit minimum du signal émis par la station de base (2) comme reçu par le terminal d'utilisateur (5, 5.1, 5.2, 5.3, 5.4) qui est requis pour offrir le service prédéterminé sous la charge prédéterminée ; et
- le rapport signal sur bruit présent et le rapport signal sur bruit minimum sont comparés afin de déterminer si une liaison descendante pour le service prédéterminé sous la charge prédéterminée du système de réseau peut être établie.

5. Procédé selon la revendication 4, **caractérisé en ce que** le rapport signal sur bruit présent est obtenu à partir d'une mesure $E_c/I_0$ d'un canal pilote du système de réseau.

6. Procédé selon l'une quelconque des revendications 1 à 5, **caractérisé en ce que**

   - la au moins une valeur de qualité présente du système de réseau comprend une perte de chemin présente d'un signal émis par une station de base (2) du système de réseau comme reçu par un terminal d'utilisateur (5, 5.1, 5.2, 5.3, 5.4) à l'emplacement prédéterminé sous la charge présente du système de réseau ;
   - la au moins une valeur de qualité requise du système de réseau comprend une perte de chemin maximum du signal émis par la station de base (2) comme reçu par le terminal d'utilisateur (5, 5.1, 5.2, 5.3, 5.4) qui est requis pour offrir le service prédéterminé sous la charge prédéterminée ; et
   - la perte de chemin présente et la perte de chemin maximum sont comparées afin de déterminer si une liaison montante pour le service prédéterminé sous la charge prédéterminée du système de réseau peut être établie.

7. Procédé selon la revendication 6, **caractérisé en ce que** la perte de chemin présente est déterminée à partir d'une mesure du RSCP (puissance du signal codé reçu) d'un canal pilote et à partir d'une puissance émise du canal pilote sur la station de base (2).

8. Procédé selon la revendication 6 ou 7, **caractérisé en ce qu'**une puissance émise de liaison montante requise pour offrir un service prédéterminé sous la charge prédéterminée est déterminée à partir de la perte de chemin présente mesurée et la charge prédéterminée, et **en ce que** la puissance d'émission de liaison montante requise est comparée à une puissance d'émission de liaison montante maximum du terminal d'utilisateur (5, 5.1, 5.2, 5.3).

9. Procédé selon l'une quelconque des revendications 1 à 8, **caractérisé en ce que** la au moins une valeur de qualité présente est mesurée dans un noeud au repos, sans établir une connexion de test dans le système de réseau.

10. Dispositif pour l'évaluation d'une couverture d'un système de réseau cellulaire, en particulier un système de réseau cellulaire CDMA, comprenant un processeur de données (12) commandé pour

    - déterminer au moins une valeur de qualité présente du système de réseau à partir de signaux reçus du système de réseau, sous une charge présente du système de réseau ;
    - déterminer au moins une valeur de qualité requise du système de réseau qui est requis pour offrir un service prédéterminé sous une charge prédéterminée, en particulier une charge cible, du système de réseau, et
    - comparer la valeur de qualité requise avec la valeur de qualité présente mesurée pour déterminer si l'emplacement prédéterminé est couvert par le système de réseau pour le service prédéterminé sous la charge prédéterminée du système de réseau.

11. Dispositif selon la revendication 10, **caractérisé en ce qu'**il est connectable à un dispositif de communication (5) tel qu'un terminal portable ou un récepteur de test dédié pour recevoir les signaux à partir du système de réseau cellulaire.

12. Produit de programme informatique pour l'évaluation d'une couverture d'un système de réseau cellulaire, en particulier d'un système de réseau cellulaire CDMA, comprenant des parties de code logiciel pour réaliser les étapes suivantes :

    - déterminer au moins une valeur de qualité présente du système de réseau à partir de signaux reçus du système de réseau, sous une charge présente du système de réseau ;
    - déterminer au moins une valeur de qualité requise du système de réseau qui est requis pour offrir un service prédéterminé sous une charge prédéterminée, en particulier une charge cible, du système de réseau ; et
    - comparaison de la valeur de qualité requise avec la valeur de qualité présente mesurée pour déterminer si l'emplacement prédéterminé est couvert par le système de réseau pour le service prédéterminé sous la charge prédéterminé du système de réseau.

Fig. 1

Fig. 2

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030087641 A1